# EUROPÄISCHE PATENTANMELDUNG

(11) **EP 3 431 948 A1**
(43) Veröffentlichungstag der Anmeldung: **23.01.2019**
(21) Anmeldenummer: 17181638.2
(22) Anmeldetag: 17.07.2017
(51) Int. Cl.: G01L 1/04, E06B 7/18

(54) **TESTSTREIFEN FÜR DICHTUNGEN**

(71) Anmelder: Planet GDZ AG, Neustadtstrasse 2 8317 Tagelswangen (CH)
(72) Erfinder: DINTHEER, Andreas, 8308 Illnau (CH)
(74) Vertreter: Clerc, Natalia

(57) **Zusammenfassung**

Ein Teststreifen (4) zur Überprüfung eines Anpressdrucks einer Dichtung (3), weist ein Kontrollelement (43, 44) auf, wobei der Teststreifen (4) mittels dieses Kontrollelements (43, 44) anzeigt, ob der Anpressdruck kleiner oder grösser als ein vorgegebener Anpressdruck ist. Vorzugsweise zeigt er an, ob der Anpressdruck innerhalb eines vorgegebenen Bereichs liegt. Vorzugsweise sind hierfür zwei Schwächungslinien vorhanden, welche im eingeklemmten Zustand des Teststreifens bei angelegtem Zug bei unterschiedlichen Anpressdrücken reissen.

## Beschreibung

### TECHNISCHES GEBIET

Die vorliegende Erfindung betrifft einen Teststreifen für Dichtungen, insbesondere für Absenkdichtungen und vorzugsweise für Absenkdichtungen, welche federbelastet auf einer zu dichtenden Fläche aufliegen, sowie ein Testset mit derartigen Teststreifen und ein Verfahren zur Überprüfung eines Anpressdrucks einer Dichtung.

### STAND DER TECHNIK

Dichtungen, insbesondere Absenkdichtungen, werden für Türen oder für Fenster eingesetzt, um einen Spalt zwischen Tür- oder Fensterflügel und Türrahmen oder Boden gegen Durchzug, Schall und Lichtdurchlass zu dichten. Seit vielen Jahren wird eine automatisch mechanisch absenkbare Dichtung erfolgreich verwendet, wie sie beispielsweise in EP 0 338 974 offenbart ist.

Die Betätigung der Absenkdichtung erfolgt automatisch ein- oder zweiseitig beim Schliessen und Öffnen der Tür bzw. des Fensters, indem beim Schliessen ein dem Flügel vorstehender federbelasteter Auslösebolzen verschoben, vorzugsweise eingedrückt, wird. Dadurch wird über einen Absenkmechanismus eine Dichtleiste vom Flügel weg abgesenkt. Beim Öffnen des Türflügels wird der Auslösebolzen wieder freigegeben, die Federn können sich entspannen und der Absenkmechanismus wird dank der Rückstellkraft der Federn wieder zum Flügel hin angehoben. Beispiele entsprechender Absenkmechanismen sind in DE 19 516 530, EP 0 509 961, DE 3 526 720, DE 3 418 438 sowie in DE 3 427 938 zu finden.

Der Hub der Dichtleiste, der Federdruck sowie die Beschaffenheit der zu dichtenden Fläche beeinflussen die Qualität der Dichtwirkung wesentlich. Insbesondere bei Aussentüren ist es für den Schutz vor Wettereinflüssen, insbesondere als Schutz vor Schlagregen, wesentlich, dass die Dichtleiste genügend fest auf die zu dichtende Fläche gepresst wird. Der Anpressdruck muss somit genügend gross sein. Er lässt sich beispielsweise durch Einstellung des Hubs optimieren, sei es bei Montage der Dichtung als auch bei regelmässigen Inspektionen.

Die Einstellung des Hubs lässt sich je nach Art des Absenkmechanismus auf unterschiedliche Weise erzielen. Ist beispielsweise ein dem Gehäuse stirnseitig vorstehender Betätigungsknopf vorhanden, welcher auf einen federbelasteten Schieber wirkt, so lässt sich der Hub beispielsweise dadurch verändern, indem eingestellt wird, wie weit der Betätigungsknopf dem Gehäuse vorsteht. Alternativ oder zusätzlich lässt sich der Hub üblicherweise auch durch Montage der Dichtung in entsprechendem Abstand zu der zu dichtenden Fläche bestimmen.

Zu fest aufliegende Absenkdichtungen, d.h. zu grosse Anpressdrücke, führen zu einer eingeschränkten Wirkungsweise. Zudem wird die Lebensdauer des elastomeren Dichtungsprofils stark minimiert, da die Dichtleiste bereits bei nicht vollständig geschlossener Tür auf dem Boden aufliegt und das Dichtungsprofil somit über den Boden schleift und zu schnell abgerieben wird.

### DARSTELLUNG DER ERFINDUNG

Es ist deshalb eine Aufgabe der Erfindung, ein Testmöglichkeit für Dichtungen, insbesondere für Absenkdichtungen, zu schaffen, welche eine optimale Einstellung der Dichtung an die örtlichen Gegebenheiten erlaubt.

Diese Aufgabe lösen ein Teststreifen mit den Merkmalen des Anspruchs 1, ein Testset mit den Merkmalen des Anspruchs 14 sowie ein Verfahren mit den Merkmalen des Anspruchs 15 bzw. 16.

Der erimdungsgemässe Teststreifen zur Überprüfung eines Anpressdrucks einer Dichtung weist ein Kontrollelement auf, wobei der Teststreifen mittels dieses Kontrollelements anzeigt, ob der Anpressdruck kleiner oder grösser als ein vorgegebener Anpressdruck ist.

In bevorzugten Ausführungsformen erfolgt diese Anzeige durch Veränderung des Kontrollelements, z.B. indem es die Farbe oder Form ändert oder indem es zerrissen, gebrochen, zerbrochen oder anderweitig zerstört wird.

In einer weiteren Ausführungsform weist der Teststreifen einen Dehnungssensor auf, welcher die Zugkraft beim Herausziehen des Teststreifens detektiert, so dass Rückschlüsse auf den auf den Teststreifen wirkenden Anpressdruck gezogen werden können. Der Dehnungssensor ist vorzugsweise ein Dehnungsmessstreifen (DMS), welcher bei einer auf den Teststreifen wirkenden Zugkraft seinen elektrischen Widerstand ändert.

Der Dehnungsmessstreifen ist je nach Ausführungsform im Teststreifen integriert oder bildet diesen selber. Der Messwert des Dehnungsmessstreifen lässt sich optisch auf dem Teststreifen anzeigen, beispielsweise durch Farbänderung oder eine anderen Lichtanzeige. Er lässt sich jedoch auch durch geeignete elektronische Mittel abfragen, beispielsweise lässt er sich mittels einer App auf einem Smart Phone, Tablet oder einem anderen intelligenten elektronischen Gerät anzeigen.

Das Anzeigemittel, z.B. das Smart Phone, zeigt in einer ersten Ausführungsform an, ob ein Anpressdruck mindestens minimal ist, in einer zweiten Ausführungsform ob er einen vordefinierten maximalen Anpressdruck übersteigt und in einer dritten Ausführungsform ob er zwischen einem vordefinierten minimalen und einem vordefinierten maximalen Anpressdruck liegt. Die zugehörige App (Applikation), welche die Widerstandsänderung im DMS abfragt und basierend auf diesen erhaltenen Werten den aktuellen Anpressdruck in Relation zu einem minimalen und/oder einem maximalen vordefinierten Anpressdruck setzt, wird hier ebenfalls beansprucht.

Dieser Teststreifen dient zur Überprüfung des Anpressdrucks und ermöglicht somit, den Anpressdruck optimal einzustellen, beispielsweise indem der Hub der Absenkdichtung entsprechend verändert wird oder ein Fenster oder eine Türe mit einer Schleifdichtung oder eine anderen Art Dichtung neu eingestellt wird, z.B. indem es höher oder tiefer montiert wird.

In einfachen Ausführungsformen sind zwei unterschiedliche Teststreifen vorhanden, von welchen ein erster Teststreifen einen vorgegebenen minimalen Anpressdruck anzeigt und ein zweiter Teststreifen einen maximalen vorgegeben Anpressdruck anzeigt.

In bevorzugten Ausführungsformen sind auf oder in demselben Teststreifen zwei oder mehr Kontrollelemente angeordnet, wobei jedes einzelne davon bei einem anderen Anpressdruck eine Reaktion, insbesondere eine Veränderung, zeigt.

Durch Verwendung unterschiedlicher Teststreifen und/oder mehrerer unterschiedlicher Kontrollelemente auf demselben Teststreifen lässt sich auf einfache Art und Weise feststellen, ob die Dichtung zu stark und ob sie zu schwach auf die zu dichtende Fläche drückt. D.h. es lässt sich feststellen, ob der Anpressdruck in einem vorgegebenen idealen Bereich liegt.

Da der Anpressdruck von den individuellen Gegebenheiten vor Ort abhängt und somit stark variieren kann, ist diese einfache, vor Ort durchführbare Kontrolle vorteilhaft.

Zwar ist es bekannt, den Anpressdruck von Fensterdichtungen zu prüfen, indem ein Blatt Papier zwischen dem Dichtungsgummi und dem Fensterrahmen eingeklemmt wird. Lässt sich das Papier bei geschlossenem Fenster nicht mehr herausziehen, so gilt die Dichtung als genügend. Da jedoch bei einer genügend grossen und genügend langsam angelegten Zugkraft das Papier praktisch immer unbeschädigt herausgezogen werden kann, ist dies kein genügend eindeutiger Indikator. Zudem lässt sich damit nicht feststellen, ob der Anpressdruck innerhalb eines vorbestimmten Bereichs liegt.

Das erfindungsgemässe Kontrollelement kann mindestens eine bei Druck veränderbare, insbesondere verfärbbare Zone auf dem Teststreifen sein. Ebenfalls kann der Teststreifen in Abhängigkeit des auf ihn wirkenden Anpressdrucks ein optisches, akustisches oder elektronisches oder ein anderes geeignetes Signal aussenden. Vorzugsweise ist das Kontrollelement jedoch eine Schwächungslinie des Teststreifens, welche im eingeklemmten Zustand des Teststreifens bei angelegtem Zug bei einem vorgegebenen Anpressdruck reisst. Dies ist eine einfache und kostengünstige Ausbildung des Teststreifens und die Überprüfung des Anpressdrucks lässt sich von jedermann ohne grosse Vorkenntnisse und ohne technische Geräte durchführen.

Das Kontrollelement ist vorzugsweise eine Schwächungslinie. Diese Schwächungslinie ist beispielsweise durch Verdünnung des Materials oder Verwendung eines anderen Materials als der übrige Teststreifen gebildet. Vorzugsweise ist sie jedoch als Perforation ausgebildet. Perforationen sind eine kostengünstige Ausgestaltung. Ferner sind im Stand der Technik derartige erst bei vordefinierten Kräften reissende Perforationen wohlbekannt, beispielsweise aus der Verpackungsindustrie.

Je nach Art der Perforation reisst der Teststreifen bei einem bestimmten Anpressdruck, wenn an ihm von Hand gezogen wird. Sind nun zwei Teststreifen mit unterschiedlichen Schwächungslinien bzw. Perforation ausgebildet bzw. ist ein Teststreifen mit zwei unterschiedlichen Schwächungslinien bzw. Perforationen versehen, so lassen sich ein minimaler und ein maximal vorgegebener Anpressdruck feststellen. Vorzugsweise reisst hierzu eine erste Schwächungslinie bei einer kleineren auf den Teststreifen wirkende Zugkraft als eine zweite Schwächungslinie. Sind die Schwächungslinien Perforationen, so ist somit die Perforation der ersten Schwächungslinie vorzugsweise stärker ausgebildet als diejenige der zweiten Schwächungslinie.

Anstelle einer zweiten Schwächungslinie oder Perforation kann auch das Material des gesamten Teststreifens so ausgebildet sein, dass es bei vorgegebenem maximalen Anpressdruck irgendwo reisst.

Vorzugsweise sind die erste Schwächungslinie und die zweite Schwächungslinie beabstandet zueinander angeordnet, damit ihre Reissfestigkeit nacheinander genutzt werden kann. Der Abstand ist vorzugsweise mindestens so gross wie die Breite der Dichtung, insbesondere der Absenkdichtung. Vorzugsweise ist der Abstand grösser als die Dicke des Tür- oder Fensterflügels.

Vorzugsweise sind die erste Schwächungslinie und die zweite Schwächungslinie in Längsrichtung des Streifens hintereinander angeordnet. Dies ermöglicht die einfache Ausbildung eines Greifbereichs, um den Teststreifen auf einfache Weise von Hand halten zu können. Zudem wird dadurch eine minimale Fläche für den Teststreifen benötigt.

Vorzugsweise sind die erste Schwächungslinie und die zweite Schwächungslinie parallel zueinander angeordnet. Dies erleichtert die optimale Anpassung der Schwächungslinien an die gewünschte Reissfestigkeit.

Vorzugweise verlaufen die erste Schwächungslinie und die zweite Schwächungslinie senkrecht zur Längsrichtung des Streifens. Auch dies ermöglicht eine minimierte Ausbildung des Teststreifens.

Vorzugsweise unterteilen die zwei Schwächungslinien den Streifen in drei Abschnitte, wobei ein erster Abschnitt zwischen einem freien Ende des Streifens und der ersten Schwächungslinie liegt und einen ersten Testabschnitt bildet, wobei ein zweiter Abschnitt zwischen der ersten und der zweiten Schwächungslinie liegt und einen zweiten Testabschnitt bildet und wobei ein dritter Abschnitt zwischen der zweiten Schwächungslinie und dem gegenüberliegenden zweiten freien Ende des Streifens liegt und einen Greifabschnitt zum Halten des Teststreifens zwischen zwei Fingern einer menschlichen Hand bildet. Die zwei Testabschnitte sind dabei vorzugsweise mindestens so lang wie die Breite der Dichtung, insbesondere der Absenkdichtung.

Vorzugsweise besteht der Teststreifen aus Papier. Er kann jedoch auch aus einem anderen geeigneten Material, beispielsweise aus Kunststoff, bestehen.

Vorzugsweise weist der Teststreifen mindestens eine Markierung zur Erleichterung der Benützung des Teststreifens auf. Diese Markierung kann beispielsweise die Richtung anzeigen, in welcher der manuelle Zug stattfinden soll.

Vorzugsweise sind mehrere Teststreifen zu einem Testset zusammengefasst, welches als Block ausgebildet ist, wobei der Block vorzugsweise eine Bindung aufweist, von welcher die Teststreifen abreissbar sind. Dieser Block lässt sich vom Handwerker einfach mitführen, ist leicht und benötigt kaum Platz.

Im erfindungsgemässen Verfahren zur Überprüfung eines Anpressdrucks einer Absenkdichtung mit einem Teststreifen wird in einem ersten Schritt der erste Testabschnitt des Teststreifens in einen Spalt zwischen der Absenkdichtung und einer zu dichtenden Fläche geschoben. Eine Dichtleiste der Absenkdichtung wird auf diesen ersten Testabschnitt abgesenkt. Anschliessend wird von Hand am Greifabschnitt gezogen, um zu prüfen, ob der eingeklemmte Teststreifen dadurch an der ersten Schwächungslinie reisst. Anschliessend wird die Absenkdichtung wieder angehoben. In einem zweiten Schritt wird der zweite Testabschnitt des Teststreifens in einen Spalt zwischen der Absenkdichtung und einer zu dichtenden Fläche geschoben. Die Dichtleiste der Absenkdichtung wird auf diesen zweiten Testabschnitt abgesenkt und es wird wiederum von Hand am Greifabschnitt gezogen, um zu prüfen, ob der Teststreifen dadurch an der zweiten Schwächungslinie reisst. Reisst nur die erste Schwächungslinie, nicht jedoch die zweite, liegt der Anpressdruck im gewünschten Bereich. Reissen keine der Linien, so ist der Anpressdruck zu tief. Reissen beide Linien, so ist der Anpressdruck zu hoch.

Dasselbe Verfahren lässt sich bei Fenstern oder Türen mit anderen Dichtungen durchführen, indem anstelle des Absenkens und Anhebens der Dichtung das Fenster bzw. die Türe geschlossen bzw. wieder geöffnet wird. Auch dieses Verfahren sind als Erfindungen beansprucht.

In einer Ausführungsform ist der minimale und maximale Anpressdruck durch absolute Werte definiert und diese Werte werden bei der Herstellung des Teststreifens berücksichtigt. In anderen Ausführungsformen wird er empirisch festgelegt, beispielsweise indem ein Fachmann im Bereich Dichtungen, insbesondere im Bereich von Absenkdichtungen, bei einer bestehenden Dichtung Versuche durchführt und basierend auf seinen Erfahrungswerten festlegt, wann der Anpressdruck einer Dichtung zu gross und wann zu klein ist. Im Falle einer Absenkdichtung liegt beispielsweise ein noch akzeptabler minimaler Anpressdruck vor, wenn ein nach Absenkung der Dichtleiste praktisch unverformt auf dem Boden aufliegendes Dichtungsprofil einen Papierstreifen noch derart festhält, dass ein merklicher Kraftaufwand notwendig ist, um den eingeklemmten Papierstreifen noch herauszuziehen. Ein noch akzeptabler maximaler Anpressdruck liegt vor, wenn das Dichtungsprofil im abgesenkten Zustand zwar verformt ist, diese Verformung aber noch optischen Anforderungen an die Ästhetik genügt und die Dichtleiste beim Schliessen der Tür nicht zu stark über den Boden schleift und das Schliessen der Tür behindert. Die Kriterien bezüglich "stark", "schwach", "merklicher Kraftaufwand" usw. werden vom Fachmann aufgrund seiner Erfahrung festgelegt. Auch wenn dies durchaus subjektiv gefärbte Kriterien sein können, hilft ein derart empirisch ausgewählter Teststreifen dem Laien doch, basierend auf dem Fachwissen Dritter Entscheidungen zu fällen, ob die Dichtungen in seinem Haus einem Standard genügen oder neu eingestellt werden müssen.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Figur 1: eine perspektivische Darstellung eines Teils einer abgesenkten Absenkdichtung in einem Türrahmen mit einem erfindungsgemässen Teststreifen beim Überprüfen eines nach unten wirkenden Anpressdrucks;
- Figur 2: eine perspektivische Darstellung des Teststreifens gemäss Figur 1 vor Gebrauch;
- Figur 3: die Darstellung gemäss Figur 1 mit dem erfindungsgemässen Teststreifen beim Überprüfen eines stirnseitig wirkenden Anpressdrucks;
- Figur 4: die Darstellung gemäss Figur 1 beim Überprüfen eines minimal vorgegebenen Anpressdrucks;
- Figur 5: den Teststreifen gemäss Figur 4 nach Detektion eines Anpressdrucks grösser des minimal vorgegebenen Anpressdrucks;
- Figur 6: die Darstellung gemäss Figur 3 beim Überprüfen des minimal vorgegebenen Anpressdrucks;
- Figur 7: die Darstellung gemäss Figur 1 beim Überprüfen eines maximal vorgegebenen Anpressdrucks;
- Figur 8: den Teststreifen gemäss Figur 7 nach Detektion eines Anpressdrucks grösser des maximal vorgegebenen Anpressdrucks;
- Figur 9: die Darstellung gemäss Figur 3 beim Überprüfen des maximal vorgegebenen Anpressdrucks;
- Figur 10: eine Ansicht des Teststreifens gemäss Figur 2 von oben;
- Figur 11: eine Ansicht des Teststreifens gemäss Figur 5 von oben;
- Figur 12: eine Ansicht des Teststreifens gemäss Figur 8 von oben und
- Figur 13: ein Testset mit erfindungsgemässen Teststreifen gemäss Figur 2.

### BESCHREIBUNG BEVORZUGTER AUSFÜHRUNGSFORMEN

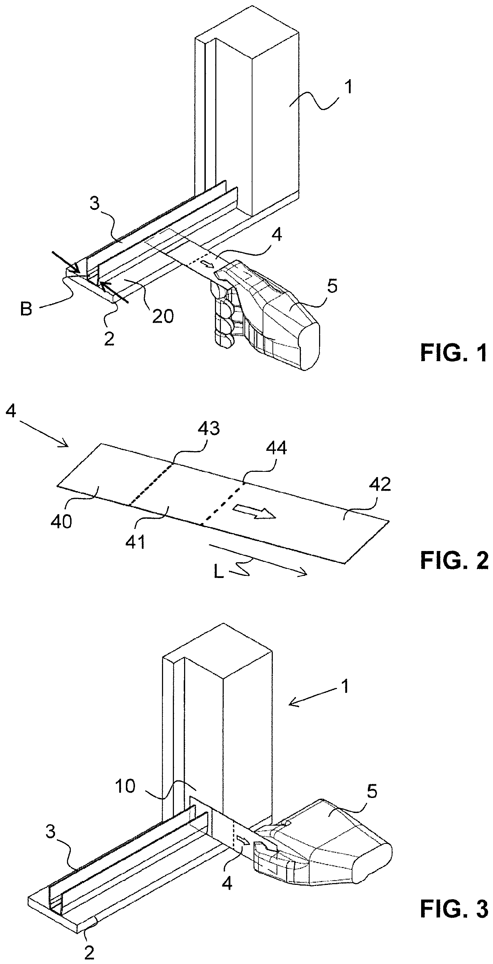

In Figur 1 ist schematisch eine Dichtsituation im Türbereich dargestellt. Gleiches gilt für einen Fensterbereich, so dass im Folgenden "Türe" als Oberbegriff auch für Fenster zu verstehen ist. Zudem wird der erfindungsgemässe Teststreifen bei Gebrauch für eine Absenkdichtung beschrieben. Der Teststreifen lässt sich ebenso für andere Arten von Dichtungen, wie beispielsweise Schleifdichtungen oder feste Dichtungen, wie sie üblicherweise umlaufend bei Türen und Fenstern angebracht werden, verwenden.

Das Bezugszeichen 1 bezeichnet einen teilweise dargestellten Türrahmen. Das Bezugszeichen 2 bezieht sich auf einen Boden oder eine mit dem Boden fluchtende Schwelle. Die mittels der Absenkdichtung zu dichtende Fläche ist mit dem Bezugszeichen 20 versehen. Der Türflügel ist nicht dargestellt. Er befindet sich logischerweise zwischen Boden 2 und Türrahmen 1. Auch die am Türflügel befestigte Absenkdichtung ist nicht vollständig dargestellt. Es ist lediglich ein Abschnitt eines Dichtungsprofils 3 dargestellt, welches als Teil einer Dichtleiste absenkbar und wieder anhebbar ist. Vorzugsweise ist die Dichtleiste beim Schliessen des Türflügels automatisch, insbesondere mechanisch, absenkbar und beim Öffnen des Türflügels ebenso automatisch wieder anhebbar.

Als Absenkdichtungen lassen sich alle bekannten Absenkdichtungen verwenden, insbesondere die eingangs beschriebenen. Vorzugsweise wird das Dichtungsprofil bzw. die Dichtleiste bei geschlossener Tür und somit abgesenkten Zustand aktiv mittels eines Anpressdrucks nach unten gepresst. Je nach Ausführungsform kann auch stirnseitig ein aktiver oder passiver Anpressdruck vorhanden sein. Aktiv bedeutet in diesem Zusammenhang beispielsweise, dass eine Kraft auf einen Absenkmechanismus wirkt, welche die Dichtleiste nach unten presst. Diese Kraft wird bei den eingangs beschriebenen Absenkdichtungen durch den am Türrahmen anstehenden Auslösebolzen ausgeübt, welcher die Dichtleiste einerseits nach unten presst und, je nach Ausführungsform des Absenkmechanismus, andererseits die Dichtleiste auch in eine horizontale Richtung verschiebt und somit eine Kraft in Längsrichtung der Dichtung auf den stirnseitigen Bereich des Türrahmens 1 ausübt. Es sind auch Absenkdichtungen bekannt, welche die Dichtleiste in beiden horizontalen Richtungen gegen beide Seiten des Türrahmens presst. Auch für diese Art Absenkdichtungen lässt sich der Teststreifen optimal einsetzen.

Zur Überprüfung des Anpressdrucks der Dichtleiste bzw. des Dichtungsprofils 3 auf die zu dichtende untere Fläche 20 lässt sich nun ein erfindungsgemässer Teststreifen 4 verwenden. Der Teststreifen 4 wird dabei zwischen abgesenktem Dichtungsprofil 3 und zu dichtender Fläche 20 eingeklemmt, wie später im Text erläutert wird. Anschliessend wird von Hand 5 gezogen und überprüft, ob der Teststreifen 4 reisst. In Figur 1 ist die Überprüfung des nach unten wirkenden Anpressdrucks dargestellt. Figur 3 zeigt die Überprüfung des stirnseitig oder seitlich wirkenden Anpressdrucks. Im letzten Fall wird der Teststreifen 4 zwischen Türrahmen 1 und abgesenkter Dichtleiste 3 eingeklemmt.

Der Teststreifen 4 ist vorzugsweise aus Papier und/oder Kunststoff, insbesondere aus einer ein- oder mehrschichtigen Folie, gefertigt.

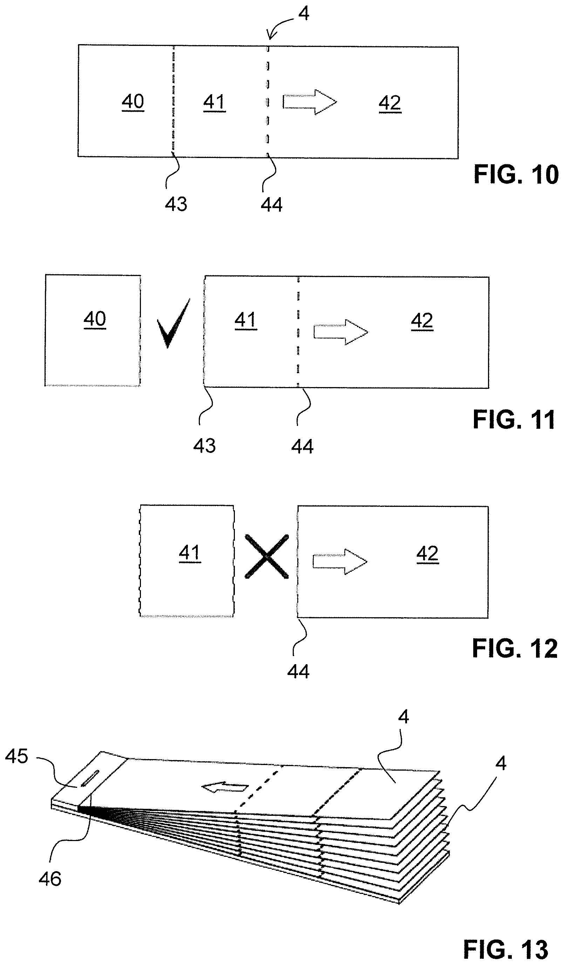

Die Figuren 2 und 10 zeigen den erfindungsgemässen Teststreifen 4 vor Gebrauch. Er weist drei Bereiche 40, 41, 42 auf, welche durch zwei Schwächungslinien 43, 44 voneinander getrennt sind. Die zwei Schwächungslinien 43, 44 verlaufen vorzugsweise beabstandet und parallel zueinander. Vorzugsweise verlaufen sie senkrecht zur Längsrichtung des Teststreifens 4.

Die Schwächungslinien 43, 44 können beispielsweise Verdünnungen oder andere Schwächungen sein, an welchen der Streifen bevorzugt reisst. Vorzugsweise sind die Schwächungslinien 43, 44 Perforationen.

Die zwei Schwächungslinien 43, 44 sind unterschiedlich stark ausgebildet, so dass sie bei unterschiedlichen Zugkräften reissen. Eine erste Schwächungslinie 43 reisst vorzugsweise schneller, also bei geringerem Anpressdruck, als eine zweite Schwächungslinie 44. Sind die Schwächungslinien 43, 44 Perforationen, so ist die Perforation der ersten Schwächungslinie 43 vorzugsweise stärker ausgebildet als die Perforation der zweiten Schwächungslinie 44. Zum Beispiel weist sie grössere Leerräume und kleinere Verbindungsstege auf. Dies ist beispielsweise in Figur 10 gut erkennbar.

Ein erster Bereich des Teststreifens 4, welcher sich von einem freien Ende des Streifens bis zur ersten Schwächungslinie 43 erstreckt, bildet einen ersten Testabschnitt 40. Ein zweiter Bereich, welcher einen zweiten Testabschnitt 41 bildet, befindet sich zwischen der ersten und der zweiten Schwächungslinie 43, 44. Die zwei Testabschnitte 40, 41 weisen eine Länge L₁, L₂ auf, welche mindestens der Breite der Absenkdichtung B entspricht.

Ein dritter Bereich ist durch die Zone zwischen der zweiten Schwächungslinie 44 und dem zweiten freien Ende gebildet. Dieser dritte Bereich ist ein Greifabschnitt 42. Er ist so gross, dass er mit zwei Fingern einer menschlichen Hand gut gehalten werden kann. Der Teststreifen 4 lässt sich dadurch im eingeklemmten Zustand gut ziehen. Dies ist in Figur 1 gut erkennbar. Vorzugsweise befindet sich die schwächere, also schneller reissende Schwächungslinie 43 weiter vom Greifabschnitt 42 weg als die stärkere, also weniger schnell reissende Schwächungslinie 44.

Vorzugsweise sind auf dem Teststreifen 4 mindestens eine Markierung und/oder mindestens eine Anweisung zur Benützung des Teststreifens 4 aufgedruckt. So kann beispielsweise ein aufgedruckter Pfeil die Zugrichtung anzeigen, wie dies in den Figuren 1 und 10 dargestellt ist. Auch können die zwei Testabschnitte 40, 41 nummeriert sein, damit der Benützer erkennen kann, welcher Testabschnitt 40, 41 zuerst eingeklemmt werden soll. Des Weiteren können in den Bereichen der Schwächungslinien 43, 44 Markierungen, Beschriftungen oder Symbole angegeben sein, welche zeigen, ob ein Reissen des Teststreifens 4 an dieser Stelle als positives oder als negatives Resultat zu verstehen ist. Diese Hinweise sind in den Figuren nicht dargestellt.

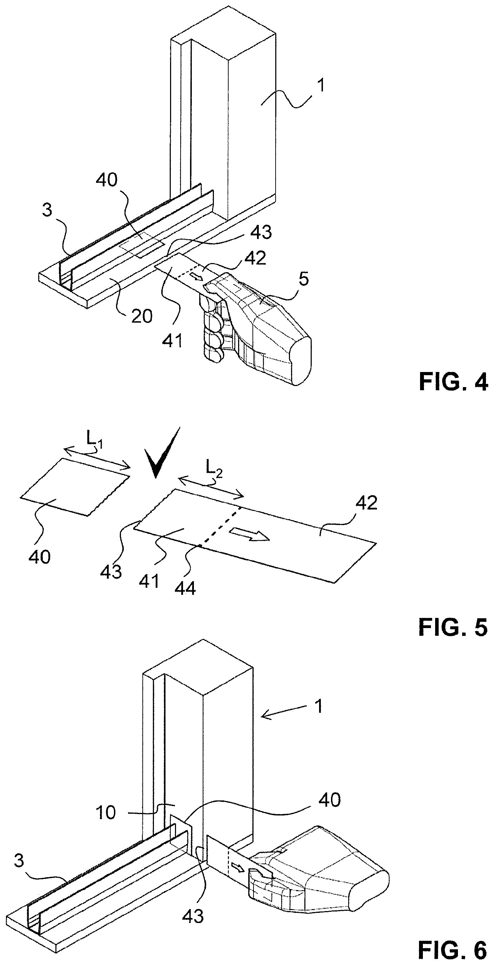

In den Figuren 4 bis 6 sowie 11 ist dargestellt, wie der Teststreifen 4 eingesetzt werden kann, um zu prüfen, ob die abgesenkte Absenkdichtung boden- und/oder stirnseitig einen vorgegebenen minimalen Anpressdruck aufweist.

Der Teststreifen 4 wird hierfür mit seinem ersten Testabschnitt 40 auf die zu dichtende Fläche 20 gelegt bzw. an diese zu dichtende Fläche 10 gehalten. Anschliessend wird die Türe geschlossen, so dass die Absenkdichtung betätigt wird und sich die Dichtleiste mit dem Dichtungsprofil 3 absenkt. Der erste Testabschnitt 40 wird zwischen Dichtungsprofil 3 und Fläche 20, 10 eingeklemmt. Wird nun von Hand gezogen und entspricht der Anpressdruck mindestens dem oben erwähnten minimalen Druck, so reisst der Teststreifen an der ersten Schwächungslinie 43. Dies ist in den Figuren 5 und 11 erkennbar. Die erste Schwächungslinie 43, insbesondere die erste Perforation, ist herstellerseitig entsprechend ausgebildet. Dies lässt sich mit bekannten Mitteln erreichen.

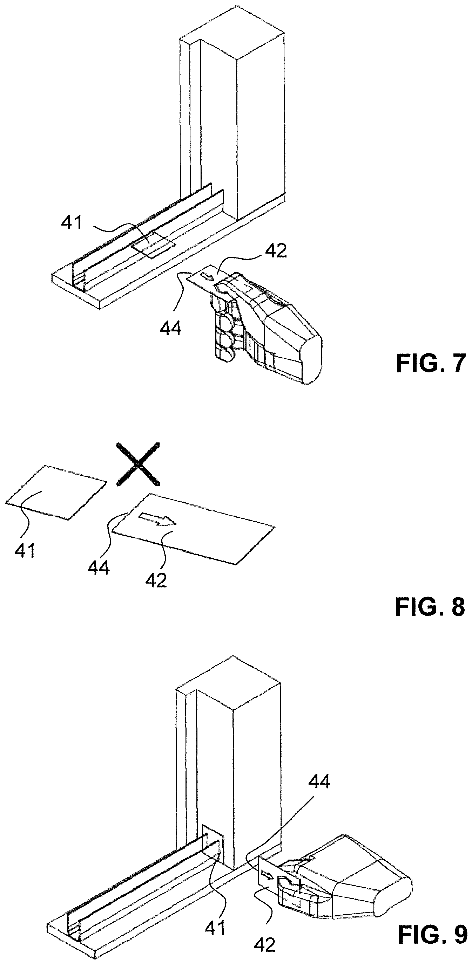

In den Figuren 7 bis 9 sowie 12 ist dargestellt, wie sich überprüfen lässt, ob der Anpressdruck nicht zu gross ist. Hierfür wird die Absenkdichtung nochmals angehoben. Der Teststreifen 4 wird ohne den bereits abgerissenen ersten Testabschnitt 40 auf die untere Fläche 20 bzw. an die stirnseitige Fläche 10 angelegt. Die Absenkdichtung wird wiederum abgesenkt, so dass nun der zweite Testabschnitt 41 eingeklemmt wird. Wiederum wird von Hand gezogen. Reisst auch diese zweite Schwächungslinie 44, so ist der Anpressdruck zu gross. Reisst sie hingegen nicht, so liegt der Anpressdruck im gewünschten optimalen Bereich.

Alternativ kann natürlich auch ein neuer Teststreifen 4 verwendet werden, welcher den ersten Testabschnitt 40 noch aufweist. In diesem Fall ist jedoch trotzdem der zweite Testabschnitt 41 einzuklemmen.

Eine umgekehrte Anordnung der Testabschnitte 40, 41 bzw. der Schwächungslinien 43, 44 ist jedoch auch möglich. D.h. die erste Schwächungslinie kann bei einem höheren Anpressdruck reissen als die zweite Schwächungslinie. In diesem Fall wird zuerst der zweite Testabschnitt 41 eingeklemmt, diesmal jedoch zur Überprüfung des minimalen Anpressdrucks. Der zweite Testabschnitt 41 wird dann zum Greifabschnitt und dient gemeinsam mit dem noch einzuklemmenden ersten Testabschnitt 40 zur Überprüfung des vorgegebenen maximalen Anpressdrucks.

Die Teststreifen 4 können einzeln abgepackt oder in einer gemeinsamen Verpackung vorliegen. Vorzugsweise sind jedoch mehrere Teststreifen 4 zu einem gemeinsamen Block zusammengefasst, welcher ein Abreissen oder Loslösen der einzelnen Teststreifen ermöglicht. Dies ist in Figur 13 dargestellt. Vorzugsweise weist der Block eine Bindung 45 an einer kurzen Seite auf. Die Bindung 45 ist vorzugsweise eine Klebung und/oder eine Heftung. Vorzugsweise ist eine Perforation 46 vorhanden, um das Entfernen der einzelnen Teststreifen 4 zu erleichtern.

Der erfindungsgemässe Teststreifen ermöglicht eine optimale Einstellung einer Absenkdichtung bzw. eines Fensters oder einer Tür mit einer Dichtung.

**BEZUGSZEICHENLISTE**

| | | | |
|---|---|---|---|
| 1 | Türrahmen | 45 | Bindung |
| 10 | zu dichtende Stirnfläche | 46 | Perforation |
| | | | |
| 2 | Boden | 5 | Hand |
| 20 | zu dichtende untere Fläche | | |
| | | L | Längsrichtung des Streifens |
| 3 | Dichtungsprofil | L₁ | Länge des ersten Testabschnitts |
| 4 | Teststreifen | L₂ | Länge des zweiten Testabschnitts |
| 40 | erster Testabschnitt | | |
| 41 | zweiter Testabschnitt | B | Breite der Absenkdichtung |
| 42 | Greifabschnitt | | |
| 43 | erste Schwächungslinie | | |
| 44 | zweite Schwächungslinie | | |

## Patentansprüche

1. Teststreifen (4) zur Überprüfung eines Anpressdrucks einer Dichtung (3), **dadurch gekennzeichnet, dass** der Teststreifen (4) ein Kontrollelement (43, 44) aufweist und
a) wobei der Teststreifen (4) mittels dieses Kontrollelements (43, 44) anzeigt, ob der Anpressdruck kleiner als ein vorgegebener Anpressdruck ist oder
b) wobei der Teststreifen (4) mittels dieses Kontrollelements (43, 44) anzeigt, ob der Anpressdruck grösser als ein vorgegebener Anpressdruck ist.

2. Teststreifen nach Anspruch 1, wobei das Kontrollelement (43, 44) sowohl anzeigt, ob der Anpressdruck kleiner als der vorgegebene Anpressdruck ist, wie auch, ob der Anpressdruck grösser als der vorgegebene Anpressdruckt ist.

3. Teststreifen nach einem der Ansprüche 1 oder 2, wobei das Kontrollelement ein mechanisches, ein optisches, ein akustisches oder ein elektronisches Element ist.

4. Teststreifen nach einem der Ansprüche 1 bis 3, wobei das Kontrollelement ein Dehnungsmesstreifen ist (DMS) ist.

5. Teststreifen nach einem der Ansprüche 1 bis 3, wobei das Kontrollelement eine Schwächungslinie (43, 44) ist, welche bei einem vorgegebenen Anpressdruck reisst.

6. Teststreifen nach Anspruch 5, wobei die Schwächungslinie (43, 44) eine Perforation ist.

7. Teststreifen nach einem der Ansprüche 1 bis 6, der Teststreifen angibt, ob der Anpressdruck innerhalb eines vorgegebenen Bereichs liegt.

8. Teststreifen nach Anspruch 7, wobei das Kontrollelement ein erstes Kontrollelement (43) zur Detektion eines minimal vorgegebenen Anpressdrucks ist und wobei der Teststreifen (4) ein zweites Kontrollelement (44) aufweist zur Detektion eines maximal vorgegebenen Anpressdrucks.

9. Teststreifen nach Anspruch 8, wobei das erste Kontrollelement eine erste Schwächungslinie (43) und das zweite Kontrollelement eine zweite Schwächungslinie (44) ist, wobei die erste Schwächungslinie (43) bei einer anderen auf den Teststreifen (4) wirkenden Zugkraft reisst als die zweite Schwächungslinie (44).

10. Teststreifen nach Anspruch 9, wobei die erste Schwächungslinie (43) bei einer kleineren auf den Teststreifen (4) wirkende Zugkraft reisst als die zweite Schwächungslinie (44).

11. Teststreifen nach einem der Ansprüche 9 oder 10, wobei die erste Schwächungslinie (43) und die zweite Schwächungslinie (44) in Längsrichtung (L) des Teststreifens (4) hintereinander angeordnet sind.

12. Teststreifen nach einem der Ansprüche 9 bis 11, wobei die erste Schwächungslinie (43) und die zweite Schwächungslinie (44) Perforationen sind, wobei die Perforation der ersten Schwächungslinie (43) stärker ausgebildet ist als die Perforation der zweiten Schwächungslinie (44), so dass die erste Schwächungslinie (43) schneller reisst als die zweite Schwächungslinie (44).

13. Teststreifen nach einem der Ansprüche 9 bis 13, wobei die zwei Schwächungslinien (43, 44) den Teststreifen (4) in drei Abschnitte unterteilen, wobei ein erster Abschnitt zwischen einem freien Ende des Teststreifens (4) und der ersten Schwächungslinie (43) liegt und einen ersten Testabschnitt (40) bildet, wobei ein zweiter Abschnitt zwischen der ersten und der zweiten Schwächungslinie (43, 44) liegt und einen zweiten Testabschnitt (41) bildet und wobei ein dritter Abschnitt zwischen der zweiten Schwächungslinie (44) und dem gegenüberliegenden zweiten freien Ende des Streifens liegt und einen Greifabschnitt (42) zum Halten des Teststreifens (4) zwischen zwei Fingern einer menschlichen Hand bildet.

14. Teststreifen nach einem der Ansprüche 1 bis 13, wobei er mindestens eine Markierung zur Erleichterung der Benützung des Teststreifens (4) aufweist.

15. Testset mit mehreren Teststreifen gemäss einem der Ansprüche 1 bis 14, wobei die mehreren Teststreifen (4) zu einem Block zusammengefasst sind und wobei der Block eine Bindung (45) aufweist, von welcher die Teststreifen (4) abreissbar sind.

16. Verfahren zur Überprüfung eines Anpressdrucks einer Absenkdichtung mit einem Teststreifen gemäss Anspruch 12, wobei in einem ersten Schritt der erste Testabschnitt (40) des Teststreifens (4) in einen Spalt zwischen der Absenkdichtung (3) und einer zu dichtenden Fläche (20, 10) geschoben wird, eine Dichtleiste der Absenkdichtung auf diesen ersten Testabschnitt (40) abgesenkt wird und von Hand an am Greifabschnitt (42) gezogen wird, um zu prüfen, ob der Teststreifen (4) dadurch an der ersten Schwächungslinie (43) reisst, wobei anschliessend die Absenkdichtung (3) wieder angehoben wird und in einem zweiten Schritt der zweite Testabschnitt (41) des Teststreifens (4) in einen Spalt zwischen der Absenkdichtung (3) und einer zu dichtenden Fläche (20, 10) geschoben wird, die Dichtleiste der Absenkdichtung auf diesen zweiten Testabschnitt (41) abgesenkt wird und von Hand an am Greifabschnitt (42) gezogen wird, um zu prüfen, ob der Teststreifen (4) dadurch an der zweiten Schwächungslinie (44) reisst.

17. Verfahren zur Überprüfung eines Anpressdrucks einer Absenkdichtung mit einem Teststreifen gemäss Anspruch 12, wobei in einem ersten Schritt der zweite Testabschnitt (41) des Teststreifens (4) in einen Spalt zwischen der Absenkdichtung (3) und einer zu dichtenden Fläche (20, 10) geschoben wird, eine Dichtleiste der Absenkdichtung auf diesen zweiten Testabschnitt (41) abgesenkt wird und von Hand an am Greifabschnitt (42) gezogen wird, um zu prüfen, ob der Teststreifen (4) dadurch an der zweiten Schwächungslinie (44) reisst, wobei anschliessend die Absenkdichtung (3) wieder angehoben wird und im Falle, dass die zweite Schwächungslinie (44) gerissen ist, in einem zweiten Schritt der erste Testabschnitt (40) des Teststreifens (4) in einen Spalt zwischen der Absenkdichtung (3) und einer zu dichtenden Fläche (20, 10) geschoben wird, die Dichtleiste der Absenkdichtung auf diesen ersten Testabschnitt (40) abgesenkt wird und von Hand am zweiten Testabschnitt (41) gezogen wird, um zu prüfen, ob der Teststreifen (4) dadurch an der ersten Schwächungslinie (43) reisst.
